(19) Europäisches Patentamt
European Patent Office
Office européen des brevets

(11) **EP 2 490 149 A1**

(12) **EUROPEAN PATENT APPLICATION**

(43) Date of publication:
**22.08.2012 Bulletin 2012/34**

(51) Int Cl.:
***G06F 21/20*** (2006.01)

(21) Application number: **12000611.9**

(22) Date of filing: **31.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.02.2011 IL 21128911**

(71) Applicant: **Deutsche Telekom AG
64307 Darmstadt (DE)**

(72) Inventors:
• **Feher, Clint
  77632 Ashdod (IL)**

• **Moskovitch, Rober
  Tel Aviv (IL)**
• **Rokach, Lior
  Omer (IL)**
• **Elovici, Yuval
  - (IL)**

(74) Representative: **Flaccus, Rolf-Dieter
Flaccus · Müller-Wolff
Patentanwälte
Bussardweg 10
50389 Wesseling (DE)**

(54) **System for verifying user identity via mouse dynamics**

(57) The invention relates to a system which accumulates during a training phase features of users' behaviors that are characteristic for each specific user while operating its pointing device. Thereafter, the system monitors the operation of the pointing devices, and identifies situations when one or more pointing devices are operated by users that have not participated in said training phase. The system alerts upon such identified situations.

Fig. 4

**Description**

**Field of the Invention**

The present invention relates to the field of user verification. More particularly, the invention relates to continuously verifying users according to characteristics of their interaction with the pointing device of the computer.

**Background of the Invention**

Currently, most computer systems and on-line websites identify users solely by means of credentials such as passwords and Personal Identification Numbers (PINs). These systems expose their users to identity thefts in which hackers impersonate legitimate users in order to commit fraudulent activity. Hackers exploit other identities by stealing credentials or by using logged-on computers that are left unattended.

The drawbacks of identification methods that only rely on credentials lead to the introduction of user verification techniques which are used in conjunction with credential-based user identification. Verification methods confirm the identity of the users according to behavioral and physiological biometrics which are assumed to be relatively constant to each user, and harder to steal. The verification may be performed once during login or continuously throughout the session. In the latter case, biometric measurements of the user are taken at regular intervals while the user is logged-on and are compared with measurements that were collected in advance. Common behavioral biometrics include characteristics of the interaction between the user and input devices such as the mouse and keyboard. Physiological biometrics, on the other hand, use fingerprints, iris patterns and other physiological features that are unique to each individual. Thus, systems utilizing biometric user verification require a hacker who wants to infiltrate the system not only to steal the credentials of the user but also to mimic the user's behavioral and physiological biometrics making identity thefts much harder.

However user verification methods that are based on physiological biometrics require dedicated hardware devices such as fingerprint sensors and retina scanners which are expensive and are not always available. Although fingerprint verification is becoming widespread in laptops, it is still not popular enough and it cannot be used in web applications. Furthermore, fingerprints can be copied. Behavioral biometrics, on the other hand, do not require special designated devices since they use common hardware such as the mouse and keyboard.

Another major difference between physiological and behavioral biometrics is the temporal aspect. Behavioral biometrics may differ depending on the time of day in which they are captured. This makes them harder to intercept and imitate but also harder to utilize. Furthermore, several challenges, which will be elaborated hereinafter [in Sections 2 and 6], still need to be overcome in order to make this approach fully operational. Consequently, behavioral biometrics was largely ignored for user verification in the past.

A biometric-based user verification system is essentially a pattern recognition system that acquires biometric data from an individual, extracts a feature set to form a unique user signature and constructs a verification model by training it on the set of signatures. User verification is achieved by application of the model to on-line acquired signatures of the inspected user that are constructed using a process identical to the one used during the model construction.

The typical architecture of a behavioral biometrics user verification system includes feature acquisition module for capturing the events generated by the various input devices used for the interaction (e.g. keyboard, mouse), feature extraction module for constructing a signature which characterizes the behavioral biometrics of the user, classifier consisting an inducer (e.g. Support Vector Machines, Artificial Neural Networks, etc) that is used to build the user verification model by training on past behavior, often given by samples, and Signature database that includes behavioral signatures that were used to train the model. Upon entry of a username, the signature of the user is retrieved for the verification process. During the verification, the induced model is used to classify new samples acquired from the user.

Today, most common behavioral biometrics verification techniques are based on mouse dynamics, keystroke dynamics, and software interaction, which include, for example, how features of a specific software tool are utilized. Behavioral methods can also be characterized according to the learning approach that they employ. Explicit learning methods monitor user activity while performing a predefined task such as playing a memory game0. Implicit learning techniques, on the other hand, monitor the user during his usual activity rather than while performing a specific task. Implicit learning is more challenging due to high inconsistency owed to the variety of the performed tasks, mood changes and other influencing factors. Nevertheless, it is the best way to learn unique user behavior characteristics such as frequently performed actions. Biometric systems are usually evaluated according to False Acceptance Rate (FAR), False Rejection Rate (FRR) and Equal Error Rate (ERR) which are described hereinafter.

One method of user verification is suggested by H. Gamboa, and A. Fred, "Behavioral Biometric System Based on Human Computer Interaction", Proc. of SPIE, vol. 5404, pp. 381-392, 2004. (referred hereinafter as Gamboa et al). Gamboa et al propose to verify the user based on his interaction with a memory game. The user is required to identify matching tiles and is verified based on characteristics of the mouse-strokes performed in order to reveal the tiles. A mouse-stroke is defined as the set of traversed points from one click to the next and a set of one or more strokes is used in order to verify the user. Features such as curvature and velocity, were used to characterize each mouse-stroke. The learning procedure employs maximum likelihood with various distributions. Evaluation is performed using 50 users with a varying number of mouse-strokes having an average duration of one second. Equal error rates (ERRs) of 0.007 and 0.002 were achieved for 100 and 200 mouse-strokes, respectively.

Another method which monitors the mouse activity is offered by A. A. E. Ahmed, and I. Traore, "A New Biometric Technology Based on Mouse Dynamics", IEEE Transactions on Dependable and Secure Computing, Vol. 4, No. 3, pp. 165-179, July-September 2007 (referred hereinafter as Ahmed et al). Ahmed et al monitors the mouse activity of users while they perform their daily tasks within their own chosen operating conditions and applications. Features are extracted and aggregated into histograms that are used to characterize each user. Ahmed et al define four action types: (a) Mouse Move (MM) - a general movement between two points; (b) Drag and Drop (DD) - an action composed of a mouse-button down event, a movement and then a mouse-button up; (c) Point and Click (PC) - mouse movement between two points followed by a click; and (d) silence - no movement.

Every action is described by properties such as the duration, traveled distance and the direction of the movement. A session is defined as a sequence of mouse activities performed by a user. The sequence is limited to a predefined number of actions and a period of time. The user is characterized by a set of 7 histograms that are constructed from the raw user session data. In order to form the histograms, the data is averaged across the session and discretisized. The histograms are used to construct a feature vector composed of 39 features which characterize each session of every user. A binary neural network model is then built for every user based on the feature vectors drawn from the different histograms. The Neural Network is trained via the back propagation algorithm. The training consists of 5 sessions, each of which contains 2000 actions (about 13.55 minutes). This experiment achieves False Acceptance Rate [FAR] of 2.4614% and FRR of 2.4649%. Shorter training times, namely 4 minutes achieves results of less than 24% FRR and 4.6% FAR. Thus, in order to construct accurate histograms, a significant amount of mouse activities should be monitored over a relatively long duration of time.

Another verification scheme based on mouse movements is disclosed by M. Pusara, and C. E. Brodley, "User Re-Authentication via Mouse-movements", Proc. of ACM Workshop Visualization and Data Mining for Computer Security, 2004 (referred hereinafter as Pusara et al). Pusara et al suggest a user verification scheme based on mouse movements while browsing a predefined set of web pages using a web browser. Features such as the mean, standard deviation, third moment of distance, angle and speed are extracted from a sequence of N events. Three main evaluations are performed. The goal of the first evaluation is checking the behavior difference between each pair of users. Results show that a relatively large number of users can be discriminated from one another. In the second evaluation, the discrimination of each user from the set of the remaining users was tested. A binary model was created for each user. A FAR of 27.5% and FRR of 3.06% were achieved on the average. The third evaluation was similar to the second but used only 11 users and applied a smoothing filter to the data. A FAR of 0.43% and a FRR of 1.75% were achieved.

Alternative approaches to user verification utilize keyboard dynamics and software interaction characteristics. Keyboard dynamics features include, for example, latency between consecutive keystrokes, flight time and dwell time. Those features are all based on the 'down', 'press', and 'up' keys events. Keyboard-based methods are divided into methods that analyze the user behavior during an initial login attempt and methods that continuously verify the user throughout the session. The former typically constructs classification model according to feature vectors that are extracted while the users type a predefined text (usually short).

One method disclosed by F. Bergadano, D. Gunetti, and C. Picardi, "User Authentication through Keystroke Dynamics", ACM Transacions on Information and System Security, Vol. 5, no. 4, pp. 367-397, 2002 (referred hereinafter as Bergadano et al) extracts the typing durations of two (di-graph) and three (tri-graph) consecutive characters from a sample and associates it to a user. The extracted graphs are ordered by their duration and their relative ordering is compared to the relative order of the training samples of other users. Keyboard-based methods for continuous verification of users extract feature vectors while the user types free text. D. Gunetti, and C. Picardi, "Keystroke analysis of free text", ACM Trans. Inf. Syst. Secur., 8(3):312-347, 2005 (referred hereinafter as Gunetti et al) extended the approach of Bergadano et al to also handle free text. Furthermore, they propose another distance measure based on absolute times. M. Curtin, C. C. Tappert, M. Villani, G. Ngo, J. Simone, H. S. Fort, and S. Cha, "Keystroke Biometric Recognition on Long Text Input: A Feasibility Study", Proc. Int. Workshop Sci Comp/Comp Stat, 2006 (referred hereinafter as Curtin et al) constructs a nearest neighbor classifier that is trained according to the duration of common characters, transition times of common di-graphs and the occurrence frequency of special keys. Although being effective, keyboard-based verification is less suitable for web browsers since they are mostly interacted with via the mouse.

Several types of software are suggested in the literature to characterize behavioral biometrics of users. These include board games, email clients, programming development tools, command line shells and drawing applications. These biometric features may be partially incorporated in user verification systems.

It is therefore an object of the present invention to provide a method based on behavioral biometrics of mouse activity which is adapted to verify the identity of a user. The method should increase the verification accuracy and reduce the time that is needed for verifying the user.

It is another object of the present invention to effectively characterize mouse actions.

Other objects and advantages of the invention will become apparent as the description proceeds.

## Summary of the Invention

The invention relates to system for verifying a user identity based on his interaction with a pointing device of a computer, comprising: (I) In a training sub-system: (a) a first acquisition module for acquiring events produced during interaction of one or more users training said pointing device, transforming said events into predefined mouse actions, and extracting features from each of said actions; (b) a database connected to said first acquisition module, for storing for each user his respective actions and the actions associated features; (c) a first classification module connected to said database for constructing one or more profiles for each user, each profile comprises a model for each of said predefined actions; (II) In a verification sub-system which operates in real time: (d) a second acquisition module for acquiring events produced during interaction of each of said users with said pointing device, transforming said events into predefined mouse actions, and extracting features from each of said actions; (e) a collector module connected to said second acquisition module, wherein said actions and their associated features are collected and sent to a second classification module once a predefined number of actions are collected; (f) a second classification module connected to said collector for, given said predefined number of actions, predicting separately for each action, using the action features and the respective model within each profile, thereby determining the probability that each of said previously trained users has performed each specific action from said predefined number of actions; (g) a decision device connected to said classification module for aggregating the probabilities given by said second classification module to provide a final decision regarding the collected actions according to the various models within each user profile.

Preferably, the first, second, or both acquisition modules further build a hierarchy of the extracted features in which the lowest level consists of fundamental mouse events while features at higher levels are composed of lower level ones.

Preferably, the first, second, or both acquisition modules further describe each event as a quartet comprising: event type, x coordinate, y coordinate, and timestamp.

Preferably, the first, second, or both acquisition modules comprise one or more classifiers.

Preferably, the classifiers are 'Random Forest' classifiers which are adapted to construct a model for each action type.

Preferably, the classifiers are constructed using vectors composed of high level features.

Preferably, the classifiers are trained using features taken from the group consisting of: trajectory center of mass, scattering coefficient, third and fourth moment, trajectory curvature, and velocity curvature.

Preferably, one classifier is constructed for each action type.

Preferably, the classifiers are trained using training sets in the form of matrices which hold the features that belong to a specific action type, wherein each action instance forms a row whose columns contain the features that are associated with the action and its label is given by the id of the user who performed the action.

Preferably, the system further comprises a models database comprising one model for each action type, wherein each model is produced using the rows of one matrix.

## Brief Description of the Drawings

In the drawings:

- Fig. 1 is an exemplary embodiment of the mouse actions levels;
- Fig. 2 is one exemplary embodiment of the hierarchy of mouse actions that are used to characterize the mouse activity actions features;
- Fig. 3 schematically illustrates a block diagram of the acquisition sub-system;
- Fig. 4 schematically illustrates a block diagram of the training sub-system;
- Fig. 5 schematically illustrates a block diagram of the verification system;
- Fig. 6 depicts a comparison result between the histogram-based and the action-based methods in terms of AUC measure;
- Fig. 7 depicts a comparison between the two methods in terms of the EER;
- Fig. 8 depicts a ROC curve for verification based on 30 actions;
- Fig. 9 depicts the comparison between the binary-class models and the multi-class model approaches in terms of the AUC measure;
- Fig. 10 depicts the comparison between the binary-class models and the multi-class model approaches in terms of the EER;

- Fig. 11 depicts the contribution of the new features in terms of the AUC measure for number of actions ranging from 1 to 100; and
- Fig. 12 depicts the contribution of the new features to the accuracy of the model in terms of the ANOVA test using 95% confidence intervals.

## Detailed Description of the Invention

The present invention introduces a method that continuously confirms the identity of users logged-on to a computer. The method verifies the users according to characteristics of their interaction with the pointing device of the computer e.g. mouse, touch pad and stylus. The user verification is derived by combining the classification results of each individual mouse action in contrast to the histogram approach in which verification is based on aggregations of mouse actions. The approach in which verification is based on aggregations of mouse actions is referred hereinafter as histogram-based, wherein combining the classification results of each individual mouse action is referred hereinafter as action-based. Verification of each individual mouse action increases the accuracy while reducing the time that is needed to verify the identity of the user since fewer actions are required to achieve a specific accuracy level.

The action-based method of the invention offers a hierarchy of mouse actions from which features are extracted. The features are used to characterize the mouse activity. New features are defined and are used in conjunction with features known in the art. In order to effectively characterize the mouse actions, a hierarchy of the features is built in which the lowest level consists of fundamental mouse events while features at higher levels are composed of lower level ones. In general, high-level features characterize the mouse activity better than low-level ones since they convey more information regarding the task intended by the user. The action-based verification method constructs a classifier using vectors composed of high level features.

Typically, all mouse activities are formed from the following five basic mouse events, referred hereinafter as atomic mouse events, which constitute the lowest level, namely level 0 of the proposed hierarchy:

1. Mouse-Move ($m$) - this event occurs when the user moves the mouse from one location to another. Many events of this type occur during the entire movement. The quantity of those events depends on the mouse resolution, sensitivity, mouse driver and operating system settings.
2. Mouse Left Button Down Event ($ld$) - occurs when the left mouse button is pressed.
3. Mouse Right Button Down Event ($rd$) occurs when the right mouse button is pressed.
4. Mouse Left Button Up Event ($lu$) - occurs after the left mouse button is released.
5. Mouse Right Button Up Event ($ru$) - occurs after the right mouse button is released.

Data describing each event is typically collected by a piece of hardware or software which may dispatch it to an event handler for further processing. Mouse events are characterized by (a) their type; (b) the location of the mouse ($x$ and $y$ coordinates); (c) the time $t$ when the event took place. Thus a mouse event is formally described by $event$-$type$<$x,y,t$>. In general, higher-level actions are formed from sequences of lower-level ones. Two consecutive mouse events are considered part of a sequence if the time duration between their occurrences is below a given threshold. This threshold is referred hereinafter as Concatenation Time-Thresholds (CTT). In one embodiment of the present invention a set of basic mouse actions is constructed based on a sequence of the atomic mouse events - $m$, $ld$, $rd$, $lu$ and $ru$. In order to concatenate two consecutive mouse events the following CTTs are define:

1. Moving CTT - Time threshold for concatenation of two consecutive Mouse-Move ($m$) events which is denoted by $\tau_{MM}$.
2. Mouse-Move to left click CTT - The time between a Mouse-Move event and a Left Mouse-Down ($ld$) event to be concatenated into an action. The Mouse-Move to Left Click concatenation time is denoted by $\tau_{MLM}$
3. Mouse-Move to right click CTT - The time between a Mouse-Move ($m$) event and a Right Mouse-Down ($rd$) event to be concatenated into an action. The Mouse-Move to Right Click concatenation Time is denoted by $\tau_{MRM}$.
4. Mouse down to mouse-up CTT - The minimal time duration between a mouse-down event ($rd$ or $ld$) and a mouse-up event ($ru$ or $lu$) event to be concatenated into an action. Optional Mouse-Move events may take place between the mouse-down and mouse-up events. The mouse-down to mouse-up concatenation time is denoted by $\tau_{DD}$.

Given the above thresholds, the following basic, mouse actions are defined. Those actions constitute level 1 of the proposed hierarchy:

1. Silence interval - is defined as a time interval that separates between two consecutive mouse events in which no action took place. Formally, the following silence intervals are defined: (a) two consecutive Mouse-Move events separated by a period of time that is greater than $\tau_{MM}$ seconds; (b) a Mouse-Move followed by a left mouse-down event after more than $\tau_{MLM}$ seconds; and (c) a Mouse-Move followed by a right mouse-down event separated by more than $\tau_{MRM}$ seconds. A silence interval is denoted hereinafter by $\sigma$.

2. Left Click (LC) - is defined as the action of clicking on the left mouse button. This action consists of a left button down event followed by a left button up event taking place within $\tau_{LC}$ seconds. Formally,

$$LC_{t_1}^{t_n} = \left\langle ld_{t_1}, [m_{t_2}, m_{t_3}, ..., m_{t_{n-1}}], lu_{t_n} \mid t_n - t_1 \leq \tau_{LC} \right\rangle$$

$t_1$ and $t_n$ denote the time points at which the left button down and left button up events took place, respectively. The $[m_{t2}, m_{t3}, ..., m_{tn-}]$ refer to optional mouse move events taking place between the mouse down and mouse up events.

3. Right Click (RC) - is defined as the action of clicking on the right mouse button which is composed of a right button up event taking place after a right button down event within $\tau_{RC}$ seconds. Formally,

$$RC_{t_1}^{t_n} = \left\langle rd_{t_1}, [m_{t_2}, m_{t_3}, ..., m_{t_{n-1}}], ru_{t_n} \mid t_n - t_1 \leq \tau_{RC} \right\rangle$$

4. Mouse-move Sequence (MMS) - is defined as the action of moving the mouse from one position to another. This action is defined as a sequence of Mouse-Move events in which the time gap between every consecutive pair of events is less *than* $\tau_{MM}$. Formally,

$$MMS_{t_1}^{t_n} = \left\langle m_{t_1}, m_{t_2}, ..., m_{t_n} \mid \forall 1 \leq k \leq n - 1 : (t_{k+1} - t_k \leq \tau_{MM}) \right\rangle$$

5. Drag-and-Drop (DD) - denotes the action in which the user presses one of the mouse buttons, moves the mouse while the button is being pressed and releases the button at the end of the movement. Using atomic events, this action begins with a left or right mouse-down event followed by a sequence of mouse-move events and terminates with a left or right mouse-up event, respectively. The minimal time between the left down event and left up event exceeds $\tau_{DD}$. Formally,

$$DD = \left\langle d_{t_1}, m_{t_2}, m_{t_3}, ..., m_{t_{n-1}}, u_{t_n} \mid t_n - t_1 > \tau_{DD} \right\rangle$$

where the duration of the action has to be greater than the click time, i.e. $\tau_{DD} > \tau_{LC}$ and $\tau_{DD} > \tau_{RC}$, for left button and right button usage, respectively.

In an embodiment of the present invention the next level of the mouse actions is composed of level 1 actions and level 0 (atomic) events as follow:

1. Mouse-Move action (MM) - is defined as a sequence of Mouse-Move events followed by silence time $\sigma$. Formally, $MM = MMS, \sigma$

2. Double Click action (DC) - is defined as two consecutive left clicks in which the mouse-up of the first click and the mouse-down of the second one occur within an interval of $\tau_j$. Formally:

$$DC = \left\langle LC_{ct_1}^{ct_2} \cdot LC_{ct_3} \mid ct_3 - ct_2 \leq \tau_I \right\rangle$$

In one embodiment of the present application, the highest level of mouse actions is level 3. The actions in this level are composed of level 1 and level 2 actions as follows:

1. Mouse-Move and Left Click Action (MM_LC) - is defined as a sequence of Mouse-Move events followed by a left click taking place at most $\tau_{MLM}$ seconds after the last Mouse-Move event. Formally,

$$MM\_LC = \left\langle MMS_{t_1}^{t_{n-1}} \cdot LC_{t_n} \mid t_n - t_{n-1} \le \tau_{MLM} \right\rangle$$

2. Mouse-Move and Right Click Action (MM_RC) - is defined as a sequence of Mouse-Move events and a right click taking place at most $\tau_{MRM}$ seconds after the last mouse move event. Formally,

$$MM\_RC = \left\langle MMS_{t_1}^{t_{n-1}} \cdot RC_{t_n} \mid t_n - t_{n-1} \le \tau_{MRM} \right\rangle$$

3. Mouse-move and Double Click Action (MM_DC) - is defined as a sequence of mouse-move events which are followed by a double left click. Formally: $MM\_DC = < MMS_{t_1}^{t_n} \cdot LC_{ct_1}^{ct_2} \cdot LC_{et3} \mid et_1 - t_n \le \tau_{MLM}, ct_3 - ct_2 \le \tau_1 >$

4. Mouse-move and Drag-and-drop Action (MM_DD) - is defined as a sequence of mouse-move events, a left/right mouse-down event, another sequence of mouse-move events and a left/right mouse-up event, respectively. Formally,

$$MM\_DD = \left\langle MMS_{t_1}^{t_n} \cdot d_{t_{m+1}}, m_{t_{m+2}}, m_{t_{m+3}}, ..., m_{t_{m+k}}, u_{t_{m+k+1}} \mid t_{m+1} - t_n \le \tau_M, t_{m+k+1} - t_{m+1} > \tau_C \right\rangle$$

where $d_{t_{m+1}}$ denotes when the mouse down event took place, $u_{t_{m+k+1}}$ is when the mouse-up event occurred and

$$d_t = ld_t, \tau_C > \tau_{LC}, \tau_M > \tau_{MLM} \text{ (for left button)}$$
$$d_t = rd_t, \tau_C > \tau_{RC}, \tau_M > \tau_{MRM} \text{ (for right button)}$$

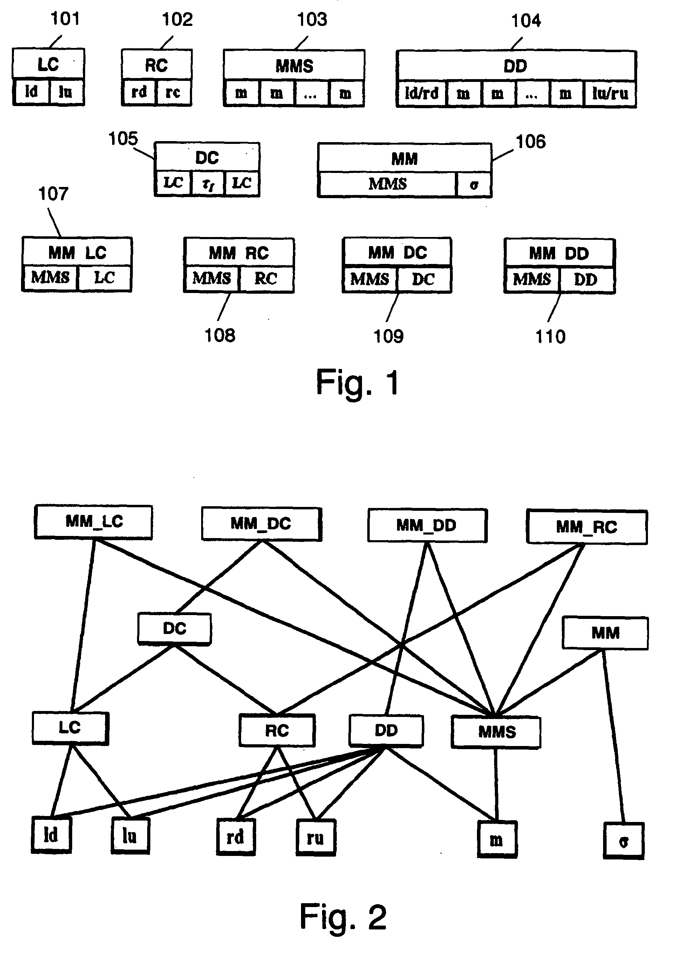

Fig. 1 is an exemplary embodiment of the mouse actions levels. In this embodiment the mouse actions in level 1 are LC 101, RC 102, MMS 103 and DD 104. The mouse actions in level 2 are DC 105 and MM 106, and the mouse actions in level 3 are MM_LC 107, MM_RC 108, MM_DC 109 and MM_DD 110.

Fig. 2 is one exemplary embodiment of the hierarchy of mouse actions that are used to characterize the mouse activity actions features.

In order to describe a mouse movement action, movement features are calculated. According to this embodiment each mouse movement is associated with the following three vectors:

1. $\mathbf{t} = \{t_i\}_{i=1}^n$ - The sampling time

2. $\mathbf{x} = \{x_i\}_{i=1}^n$ - The horizontal coordinate sampled at time $t_i$.

3. $\mathbf{y} = \{y_i\}_{i=1}^n$ - The vertical coordinate sampled at time $t_i$.

The length of the path produced by the sequence of points until the *i*-th point is defined as:

$$S_i = \sum_{k=1}^{i} \sqrt{\delta x_k^2 + \delta y_k^2}$$

where $\delta_{x1} = x_{1+1} - x1$ and $\delta y_i = y_{l+1} - y_l$.

Table 1 presents a set of basic mouse movement features that are extracted from the vectors x, y ant t, and are used by the method according to one embodiment of the present invention.

**Table 1: Basic mouse movement features**

| Feature name | Description | Formal definition |
|---|---|---|
| Angle of movement | Angle of the path tangent with the x-axis | $\theta_t = \arctan^*\left(\frac{\delta y_1}{\delta x_1}\right) + \sum_{j=1}^{t}\delta\theta_j$ <br><br> $\delta\theta_t = \min\left\{\delta\arctan^*\left(\frac{\delta y_t}{\delta x_t}\right) + 2k\pi\right\}$ |
| Curvature | The relative angle change to the traveled distance | $c = \dfrac{\delta\theta}{\delta s}$ |
| Curvature change rate | | $\Delta c = \dfrac{\delta c}{\delta s}$ |
| Horizontal Velocity | Velocity with respect to the x-axis | $V_x = \dfrac{\delta x}{\delta t}$ |
| Vertical Velocity | Velocity with respect to the y-axis | $V_y = \dfrac{\delta y}{\delta t}$ |
| Velocity | | $V = \sqrt{\delta V_{x_x}^2 + \delta V_{y_x}^2}$ |
| Acceleration | | $\dot{V} = \dfrac{\delta V}{\delta t}$ |
| Jerk | | $\ddot{V} = \dfrac{\delta\dot{V}}{\delta t}$ |
| Angular Velocity | | $w = \dfrac{\delta\theta_t}{\delta t}$ |

Based on the features in table 1, a set of higher-level features is constructed. In order to calculate some of these features, the vectors $x, y$ are first interpolated and the interpolated results are denoted by $x', y'$, respectively. The result is used to obtain the interpolated traveled distance which is denoted by $s'$.

An exemplary subset of higher-level features is given in Table 2.

**Table 2: Additional extracted features based on x', y', s' and the basic features**

| Feature name | Description | Number of features | Formal definition |
|---|---|---|---|
| minimum, maximum, mean, standard deviation and (maximum-minimum) | The specified statistic of $x'$, $y'$, $\theta$, $c$, $\Delta c$, $V_x$, $V_y$, $V$, $\dot{V}$, $\ddot{V}$ and $w$ | 55 | > |
| Duration of movement | | 1 | tn |

(continued)

| Feature name | Description | Number of features | Formal definition |
|---|---|---|---|
| Traveled distance | | 1> | $S_{n-1}$ |
| Straightness(S) | | 1 | $\dfrac{\sqrt{(x_1 - x_n)^2 + (y_1 - y_n)^2}}{S_{n-1}}$ |
| Critical Points (CP) | | 1 | $Critical\ Points(CP) = \sum_{i=1}^{n} z_i,\ where$ $z_i = \begin{cases} 1\ if\ \Delta c_i = 0 \wedge |c_i| > \alpha \\ 0\ otherwise \end{cases}\ for\ \alpha > \dfrac{\pi}{10}\ \dfrac{rad}{pixel^2}$ |
| Jitter(J) | | Number of features | $\dfrac{S'}{S_{n-1}}$ |

The method according to the present application introduces a set of new features that are used in conjunction with the features in Table 2. In one embodiment the new set includes the following features :

1. Trajectory Center of Mass (TCM) - a single feature that measures th average time for performing the movement where the weights are defined by the traveled distance :

$$TCM = \frac{1}{S_{n-1}} \sum_{i=1}^{n-1} t_{i+1} \sqrt{(x_{i+1} - x_i)^2 + (y_{i+1} - y_i)^2}$$

2. Scattering Coefficient (SC) - measures the extent to which the movement deviates from the movement center of mass:

$$SC = \frac{1}{S_{n-1}} \sum_{i=1}^{n-1} t_{i+1}^2 \sqrt{(x_{i+1} - x_i)^2 + (y_{i+1} - y_i)^2} - TCM^2$$

3. Third and Fourth Moment (M3, M4)

$$M_k = \frac{1}{S_{n-1}} \sum_{i=1}^{n-1} t_{i+1}^k \sqrt{(x_{i+1} - x_i)^2 + (y_{i+1} - y_i)^2}$$

where k=3,4.
4. Trajectory Curvature (TCrv) - The average of the following quantity is taken over all the sampled points:

$$TCrv = \frac{\dot{x}\ddot{y} - \ddot{y}\ddot{x}}{(\dot{x}^2 + \dot{y}^2)^{\frac{3}{2}}}$$

5. Velocity Curvature (VCrv). The average is taken as the feature.

$$VCrv = \frac{\ddot{v}}{(1+\dot{v}^2)^{\frac{3}{2}}}$$

Table 3 summarizes the features which are used by the proposed algorithm in order to characterize mouse movement actions.

**Table 3: 66 features representing a movement sequence.**

| VCrv | TCrv | Mk | sc | TCM | J | CP | S | Sn-1 | tn | Factors |
|---|---|---|---|---|---|---|---|---|---|---|
| 1 | 1 | 2 | 1 | 1 | 1 | 1 | 1 | 1 | 1 | Features |
| | | | | | | | | | | |
| w | $\ddot{V}$ | $\dot{V}$ | $\overline{V}$ | $\overline{Vy}$ | $\overline{Vx}$ | $\Delta c$ | c | $\theta$ | y' | x' | Factors |
| 5 | 5 | 5 | 5 | 5 | 5 | 5 | 5 | 5 | 5 | 5 | Features |

In order to describe LC, RC, DC, DD, MM_LC, MM_RC and MM_DD mouse actions, additional features are extracted depending on the action type at hand. Table 4 provides a detailed description of the features that are used to characterize each of the actions according to one embodiment.

**Table 4: Features of the mouse actions that are used to describe the mouse activity**

| Number of features | Features | Action |
|---|---|---|
| 2 | o Click Time (CT) - The time between the mouse down event and the mouse up event which is less than $\tau_{RC}$.<br>o Traveled Distance during Click (TDC) - The distance traveled between the mouse down event and the mouse up event. | Right Click (RC) |
| 66 | o The features of the movement between the mouse-down and mouse-up events which are summarized in this table. | Drag and Drop (DD) |

(continued)

| Number of features | Features | | Action |
|---|---|---|---|
| 6 | o | First Click Time (FCT) - The time between the mouse- down and mouse-up events, which is less than $\tau_{LC}$. | Double Click (DC) |
| | o | First Click Distance (FCD) - The distance traveled between the mouse-down and mouse-up events of the first click. | |
| | o | Interval Time (IT) - The time interval between the first click and the second one, which is less than $\tau_I$. | |
| | o | Interval Distance (ID) - The distance traveled between the first click and the second one. | |
| | o | Second Click Time (SCT) - The time between the mouse-down and mouse-up events, which is less than $\tau_{LC}$. | |
| | o | Second Click Distance (SCD) - The distance traveled between the mouse-down and mouse-up events of the second click. | |
| 70 | o | Mouse movement features from the beginning of the action until the mouse down event (this table). | Mouse Move and Left or Right Click Action (MM_LC) |
| | o | Time to Click (TC) - The time between the mouse-move event immediately preceding the mouse-down event and the mouse-down event itself. | |
| | o | Distance to Click (DC) - The distance between the mouse-move event immediately preceding the mouse-down event and the mouse-down event itself. | |
| | o | Click Time (CT) - The time between the mouse-down and mouse-up events, which is less than $\tau_{LC}$. | |
| | o | Traveled Distance during Click (TDC) - The distance traveled between the mouse-down and the mouse-up events. | |

(continued)

| Number of features | Features | Action |
|---|---|---|
| 74 | o  Mouse movement features from the beginning of the action until the mouse down event (Table 6).<br>o  Time to click (TC) - The time between the mouse-move event immediately preceding the mouse-down event and the mouse-down event itself.<br>o  Distance to click (DC) - The distance between the mouse-move event immediately preceding the mouse-down event and the mouse-down event itself.<br>o  First Click Time (FCT) - The time between the mouse-down and the mouse-up events, which is less than $\tau_{LC}$.<br>o  First Click Distance (FCD) - The distance traveled between the mouse-down and the mouse-up events of the first click.<br>o  Interval Time (IT) - The time interval between the first click and the second, which is less than $\tau_I$.<br>o  Second Click Time (SCT) - The time between the mouse- down and the mouse-up events, which is less than $\tau_{LC}$.<br>o  Second Click Distance (SCD) - The distance traveled between the mouse-down and the mouse-up events of the second click. | Mouse Move and Double Click Action (MM_DC) |
| 134 | o  Mouse movement features from the beginning of the action until the mouse down event (this table).<br>o  Time to click (TC) - The time between the mouse-move event immediately preceding the mouse-down event and the mouse-down event itself.<br>o  Distance to click (DC) - The distance between the mouse-move event immediately preceding the mouse-down event and the mouse-down event itself.<br>o  Mouse movement features describing the movement between the mouse-down and mouse-up events of the drag-and-drop action (this table). | Mouse Move and Drag and Drop Action (MM_DD) |

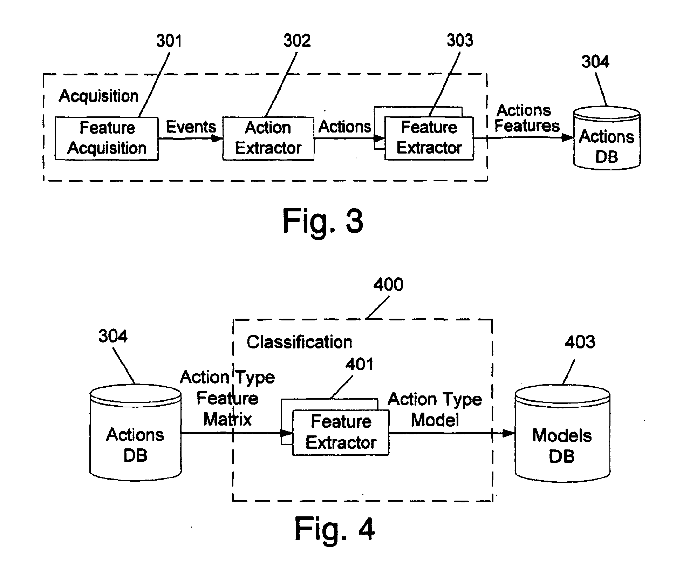

The system according to one embodiment of the present invention is composed of three main sub-systems, namely, acquisition, training, and verification. The acquisition sub-system is responsible for capturing the mouse events that constitute the users' mouse activity. Fig. 3 schematically illustrates a block diagram of the acquisition sub-system. In this embodiment the acquisition sub-system is composed of three modules 301-303 and one database 304.

Feature acquisition 301 is responsible for acquiring the events that are produced by the mouse. Each event is described as a quartet *<event type, x coordinate, y coordinate, timestamp>.* For example, the quartet *<MM, 220, 320, 63355951016724>* represents a mouse-move event, at location X=220, Y=320 at time 63355951016724 milliseconds after 12:00:00 midnight, January 1, 0001. Action extractor 302 transforms the acquired events into the mouse actions defined hereinabove. Each action is extracted and associated with its events in order to facilitate the extraction of the different features proposed in the above tables.

Feature extractor 303 is responsible to deriving features from the given action. In this embodiment multiple instances are used since different feature extractors are required for different types of actions. The extracted features are summarized in Table 4. Actions DB 304 stores the actions and their associated features of each user. This information is used to construct the profiles of each user in the training process.

Fig. 4 schematically illustrates a block diagram of the training sub-system 400. The training sub-system contains classifiers 401. In one embodiment a classifier is constructed for each action type. The actions of the users that are stored in the Actions DB 304 are used for constructing training sets in the form of matrices. Each matrix holds the features that belong to a specific action type. Specifically, each action instance forms a row whose columns contain the features that are associated with the action and its label is given by the id of the user who performed the action. A classifier is trained using the rows of one matrix to produced a model and store it in models DB 403. In one embodiment the models DB comprises one model for each action type. In one embodiment the classifier utilized is the Random Forest classifier. This classifier is a multi-class classifier, constructed from an ensemble of decision trees. Given a training set consisting of $N$ instances, bootstrap samples of size $N$ are drawn from it. Each sample is used to construct a decision tree. The classification of a pattern is obtained by a majority voting scheme applied to the results of the constructed trees.

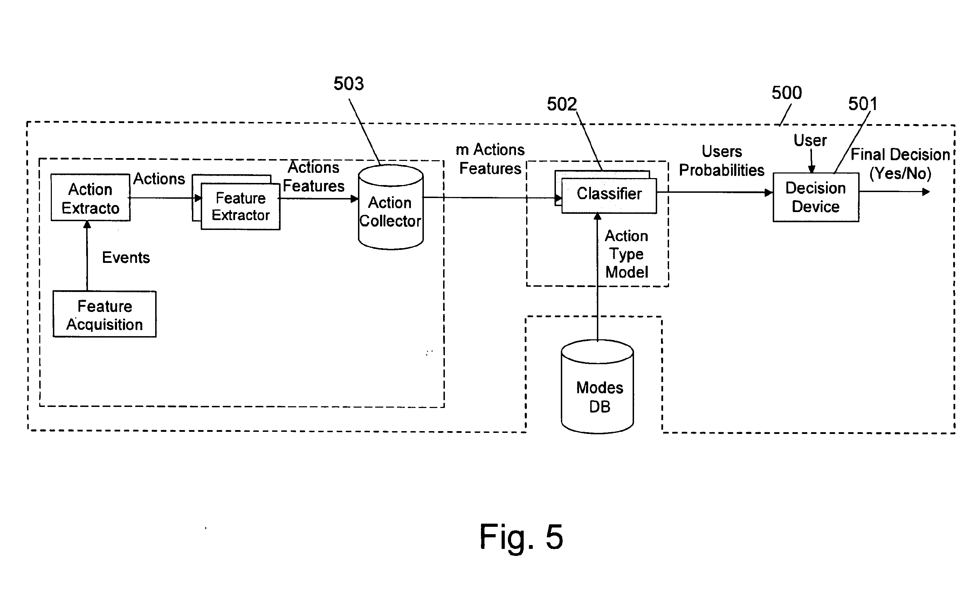

Fig. 5 schematically illustrates a block diagram of the verification system 500. Besides the components similar to the components in the acquisition and the training sub-system, the verification system further comprises a decision device 501, which provides the final result, namely whether the user identity as provided matches the users probabilities calculated by classifier 502. In one embodiment, the verification process executed by the verification system comprises the following steps: (a) extracting features from the acquired actions via a process that is similar to the one employed by the acquisition part; (b) storing the extracted features in Action Collector 503; (c) sending actions collected to the appropriate classifier according to the action type, once a sufficient number of (consecutive) actions are collected (according to a predefined threshold - m); (d) predicting using classifier 502 for each of the trained users, the probability that each of them performed each of the m actions ; and (e) combining the probabilities to derive a final result using decision device 501.

In one embodiment classifier 502 is the 'Random Forest' classifier which constructs the model for each action type. The actions are collected by Action Collector 503, and each action collected is then passed to the appropriate classifier according to its type. Let $U = \{U_1,...,U_n\}$ be the set of trained users and let $A = \{a_1,...,a_m\}$ be a set of performed actions. Each classifier (associated with action $a_j$ estimates for each trained user $u_i$ the probability he performed action $a_j$. This probability is denoted by $\hat{P}(u_i \mid a_j)$ Let $T_{ik} = \left\{ t_{ik}^1, t_{ik}^2, ..., t_{ik}^{m_{ik}} \right\}$ be the set of $m_{ik}$ training instances of action type $a_k$ performed by user i. In many cases $m_{ik}$ may vary between the users for each type of action. This may result in a biased decision by the classifier. In order to overcome this problem, normalization is applied to the probabilities. Specifically, the probability $P^{Post}(u_i \mid a_j)$ that an action $a_j$ was performed by user $u_i$ is given by:

$$P^{post}(u_i|a_j) = \frac{P^{norm}(u_i|a_j)}{\sum_{t=1}^{n} P^{norm}(u_t|a_j)}$$

where:

$$P^{norm}\left(u_i|a_j\right) = \frac{\dfrac{\hat{P}\left(u_i|a_j\right)}{n \cdot P^{apr}\left(u_i|a_j\right)}}{\sum_{t=1}^{n}\dfrac{\hat{P}\left(u_t|a_j\right)}{n \cdot P^{apr}\left(u_t|a_j\right)}} = \frac{\hat{P}\left(u_i|a_j\right)}{P^{apr}\left(u_i|a_j\right)}\sum_{t=1}^{n}\frac{P^{apr}\left(u_t|a_j\right)}{\hat{P}\left(u_t|a_j\right)}$$

$P^{apr}\left(u_i \mid a_j\right)$ denotes the a-priori probability derived by the training step.

Decision device 501 provides a final decision regarding the performed actions. It combines the probabilities given by classifiers 502 and produces a final probability $P^{Post}\left(u_i \mid a_1,...,a_m\right)$, The probability that the set of actions $a_1,..., a_m$ belongs to user $u_i$ is given by the following formula:

$$P^{post}\left(u_i|a_1,...,a_m\right) = \frac{\sum_{j=1}^{m} P^{post}\left(u_i|a_j\right)}{\sum_{i=1}^{n}\sum_{j=1}^{m} P^{post}\left(u_i|a_j\right)}$$

The set of actions $a_1,...,a_m$, is associated to user $u_i$ if the resulting probability is above a threshold $\lambda$. i.e.,

$$Final\ Decision(\{a_1,...,a_m\} \in u_i) = \begin{cases} Yes & P^{post}\left(u_i|a_1,...,a_m\right) \geq \lambda \\ No & Otherwise \end{cases}$$

In order to intercept internal attacks the value of $\lambda$ must be chosen such that the final decision is unique. Since the probabilities sum to 1, this is obtained when $\lambda > 0.5$.

### Examples

In order to evaluate the proposed system, an extensive and diverse data was collected from a wide variety of users and computer configurations.

Given that data, the proposed system was evaluated by performing the following experiments:

1. Comparison between the proposed approach and the histogram-based binary-class approach proposed by Ahmed et al.
2. Comparison between the proposed approach employing multi-class verification and the proposed approach employing binary-class model.
3. Testing the contribution of the new features to the verification accuracy.

The feature acquisition was performed in 25 computers which were used by 21 males and 4 females. The computers were chosen from a wide variety of brands and hardware configurations. Specifically, the computers included 13 desktops, 12 laptops. The CPU speeds ranged from 1.86 GHz to 3.2 GHz and the pointing devices included optical mice, touch pads and styli.

Typically, different users interact with one or more computer systems. These users may be associated with the institution or company to which the computer systems belong or alternatively, they may be external. Accordingly, the following two groups of users were defined: (a) Internal Users - correspond to users that belong to the institution or company; and (b) External Users - users that are external to the institution or company. Generally, one or more internal users may be authorized to interact with a particular computer system while the rest of the users (internal and external) are not. Such interaction type is referred hereinafter as an 'authorized interaction'. It is assumed that the number of authorized interactions performed by an internal user is higher than the number of unauthorized ones since most of the time the legal users interact with their computer systems. Moreover, the number of unauthorized interactions by external users is even smaller since they are not supposed to have access to any of the computers within the company. This assumption is manifested by the number of legal verification attempts, internal attacks and external attacks that are chosen in the evaluation.

Determining the configuration for the experiments included setting the thresholds values of $\tau_{MM}$, $\tau_{MLM}$, $\tau_{MRM}$, $\tau_{LC}$, $\tau_{RC}$, $\tau_I$ that are used for constructing the actions. All thresholds values were set to 500 milliseconds. The action extraction incorporated filtration in which, calculation of the movement features associated with the different actions such as speed, acceleration and jerk, is only done if a minimal amount of events is at hand. Only movements that contained at least 4 different points were considered. Events whose type and position were equal to those of the event which preceded them were ignored.

Two-fold cross validation was used in the experiments, i.e., the data collected for each of the users was split into 2 equal partitions training and testing. The profile of each user was constructed from the training partition and the testing partition was used to generate legal verifications and illegal attacks. On the average, the training set consisted of 15.494 hours of activity per user and the average action duration was approximately 1.4 seconds. The set of all available users $U = \{u_1,...,u_n\}$ was randomly divided in each fold into a set of $k$ internal users $IU=\{iu_{j_l},...,iu_{jk} \mid iu_{jl} \in U, 1 \leq j \leq n, l=1,...,k\}$ and a set of external users $EU=U - IU$. Profiles were constructed for each of the internal users in $IU$ according to the training activity that belonged to all users in $IU$. Each of the users in $IU$ was tested for authorized and unauthorized access based on a varying number of consecutive actions. In each of the experiments the number of internal users was set to $|IU|=12$ and the number of actions varied between 1 and 100 actions. All the experiments were conducted using the same testing instances to allow credible comparisons.

Attacks by internal and external users were simulated and are referred hereinafter as internal and external attacks, respectively. An internal attack was simulated by changing the user id of an activity that belongs to an internal user to an id of another internal user. An external attack was simulated by associating actions of an external user with an id of an internal user. Specifically, 24 internal attacks were simulated for each user in each of the two folds, producing 48 internal attacks per user and a total of 48*25 = 1200 internal attacks. Six external attacks were simulated for each user in each of the two folds, producing 12 external attacks per user and a total of 12*25 = 300 external attacks.

In addition to the attacks, 72 authorized interactions were checked for each user in each of the two folds, simulating a legitimate user working on a computer system. This produced 144 legal verification attempts per user and 144*25 = 3600 verification attempts in total. The training and testing were performed on computer with 16GB RAM and an Intel(R) Xeon(R) CPU running at 2.5Ghz which achieved all the execution times that are specified below.

Since biometric-based verification systems are a special case of classifiers, their performance is evaluated using similar measurements. Specifically, the following measurements were used:

● False Acceptance Rate (FAR) - measures the ratio between the number of attacks that were erroneously labeled as authentic interactions and the total number of attacks.
● False Rejection Rate (FRR) - measures the ratio between the number of legitimate interactions that were erroneously labeled as attacks and the total number of legitimate interactions.
● ROC Curve - a graphical representation of the tradeoff between the FAR and the FRR for every threshold. The point (0,0) represents perfect verification while the point (1, 1) represents wrong verification for every instance.
● Area Under Curve (AUC) - measures the area under the ROC curve. A lower AUC is sought after since it corresponds to better performance.
● Equal Error Rate (EER) - The rate at which both acceptance and rejection error rates are equal.

Based on the above measurements, additional measurements were defined:

● INTERNAL_FAR - measures the FAR attained from the attacks performed by internal users.
● EXTERNAL_FAR - measures the FAR attained from the attacks performed by external users.

Comparison Example 1

One common approach is the histogram-based, which uses histograms in order to aggregate multiple actions and utilizes a binary model in order to represent each user. This experiment compares the histogram-based approach with the approach proposed by the present invention which based on individual actions, and refer here as action-based. In order to construct histograms from the features that are used to characterize the mouse actions, discretization is first employed to continuous features. Specifically, one of the following methods applies to each feature:

1. Distance discretization - In most cases, during click/double click no distance is traveled. Thus, in this case discretization was performed via two binary features. The first is set to 1 if no distance was traveled; otherwise the second feature is set to 1. This discretization was applied to the DC, FCD, ID, SCD and TDC features.
2. Critical Points (CP) discretization - The values observed for the CP feature were 0, 1, 2 and 3. Therefore, the discretization produced five binary features. A critical point value of 0 would set the first feature to 1 and the rest to 0, a critical point value of 1 would set the second feature to 1 and the rest to zero and so on. The last feature would be set to 1 if the number of critical points is greater than 3. This discretization applies to the CP feature.

3. Equal Frequency (EQF) discretization - The values of each feature were separated into 5 equally-spaced intervals. This discretization was applied to the remaining features.

The discretisized features were used by both the proposed approach and the histogram-based one. By performing aggregation of the discretisized features of each action, occurrence histograms were created. The feature average histograms were created by averaging the remaining features. Then, a verification attempt based on $N$ actions was performed by extracting and then individually aggregating each of the eight types of actions from the $N$ actions. The aggregated values were concatenated to form a feature vector that characterizes the user's activity. In addition, the relative occurrence of each action was added to the feature vector.

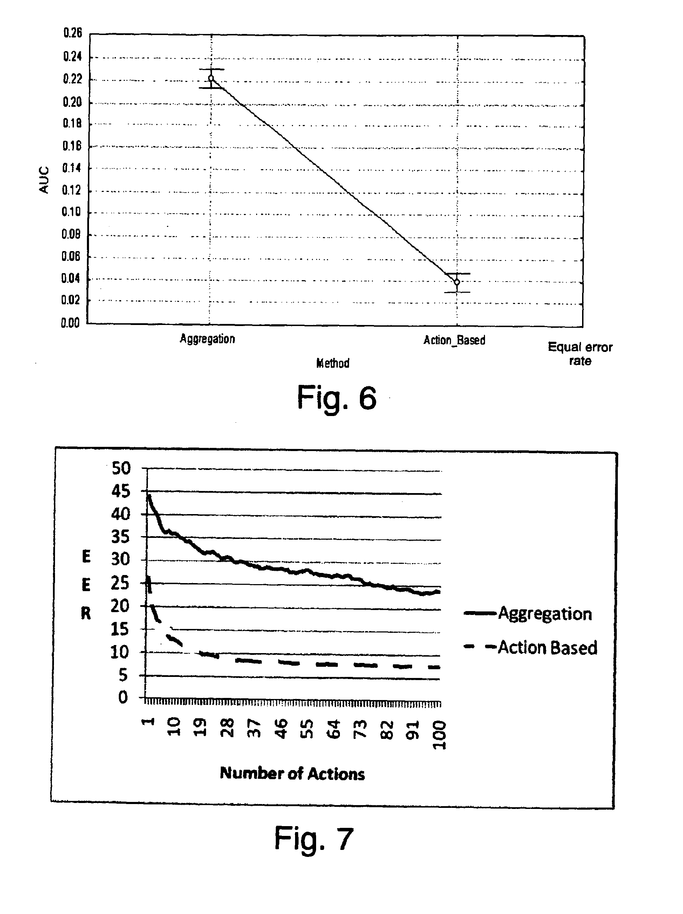

In order to train the model, the training set data was split into 5 equal partitions and each training partition was used to produce a single aggregated vector. Thus, each user was represented by 5 vectors. Figs. 6 and 7 present the comparison results between the aggregation and the action-based approaches. Fig. 6 depicts the comparison between the two methods in terms of AUC measure incorporating the Analysis Of Variance (ANOVA) test with 95% confidence intervals. As mentioned hereinabove, lower AUC corresponds to better performance. Therefore, it is evident that the action-based method outperforms the histogram-based approach. Fig. 7 depicts the comparison between the two methods in terms of the EER of the two methods for different quantities of actions. The action-based method is superior for any quantity of actions. Furthermore, a sharp decrease in the EER is observed in the action-based method when the number of actions that is used for verification ranges from 1 (26.25% EER) to 30 actions (~8.53% EER). When the number of actions is between 30 and 100, the decrease becomes more moderate and for 100 actions the EER is equal to 7.5%. The aggregation approach produces 29.78% and 23.77% EER for 30 and 100 actions, respectively.

As mentioned above, the average duration of an action was less than 1.4 seconds. The construction of the verification vector and testing time per action was approximately 3 milliseconds. Thus, the required time for verification based on 30 and 100 actions is approximately 42 seconds and 2.33 minutes, respectively. Consequently, in this embodiment, the approach proposed by the present application provides a method for verifying the user in less than 2 minutes with a maximal equal error rate of 10%.

Fig. 7 clearly shows that the action-based method is superior to the histogram-based method for any number of actions, and produces EER of 8.53% and 7.5% for 30 and 100 actions, respectively, while the histogram-based method produced EER of 29.78% and 23.77% for the same number of actions. In contrast to the results achieved by the Action-based method, the histogram-based method suffers from a sharp decrease in the EER until 30 actions. The decrease becomes more moderate for a number of actions higher than 30.

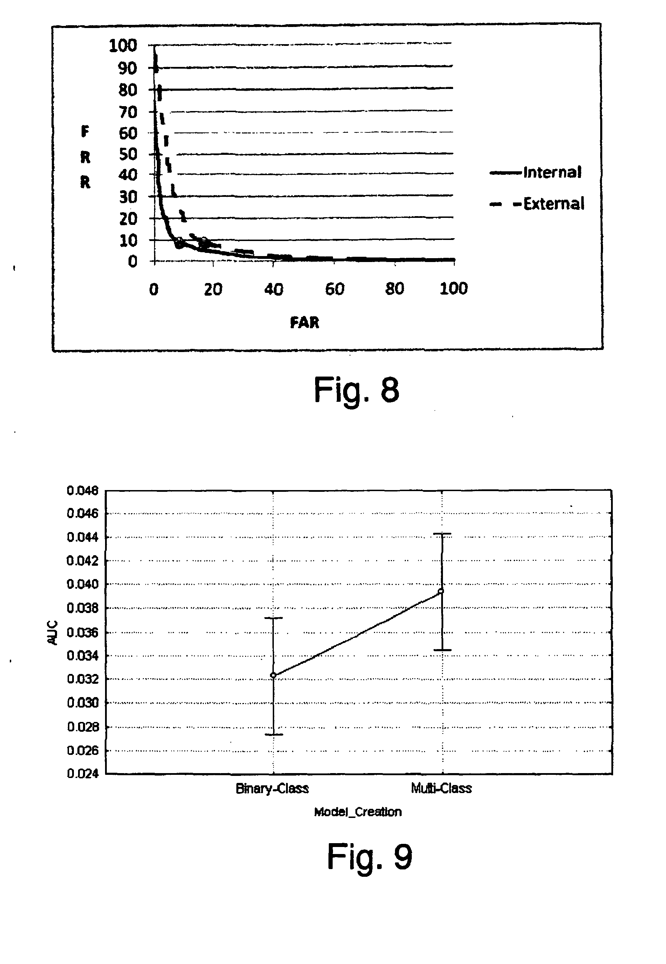

Fig. 8 depicts a ROC curve for verification based on 30 actions. The optimal points on the ROC curve in which the acceptance and rejection errors are equal are obtained for an internal EER of 8.53% and a relatively high external FAR of 17.66%. The choice of the optimal points may be altered according to security level that is sought after. For instance, a point where the FAR is low and the FRR is high suits users that have highly confidential information on their computer system while a point with relatively low FRR and higher FAR may reduce the rate false alarms of legitimate access. The method of the present application suggests producing an instance for every action, unlike traditional methods which use a set of actions performed within a session to produce a single instance in the training and test sets.

## Comparison Example 2

The next experiment provides a comparison between the proposed approach employing multi-class verification and the proposed approach employing binary-class model. The purpose of this experiment is to determine whether modeling users employing a multi-class approach is superior to modeling the users employing binary class models. In the latter, a binary model was constructed for every action and user pair in the training set in order to derive the probability $P(u_i \mid a_j)$.

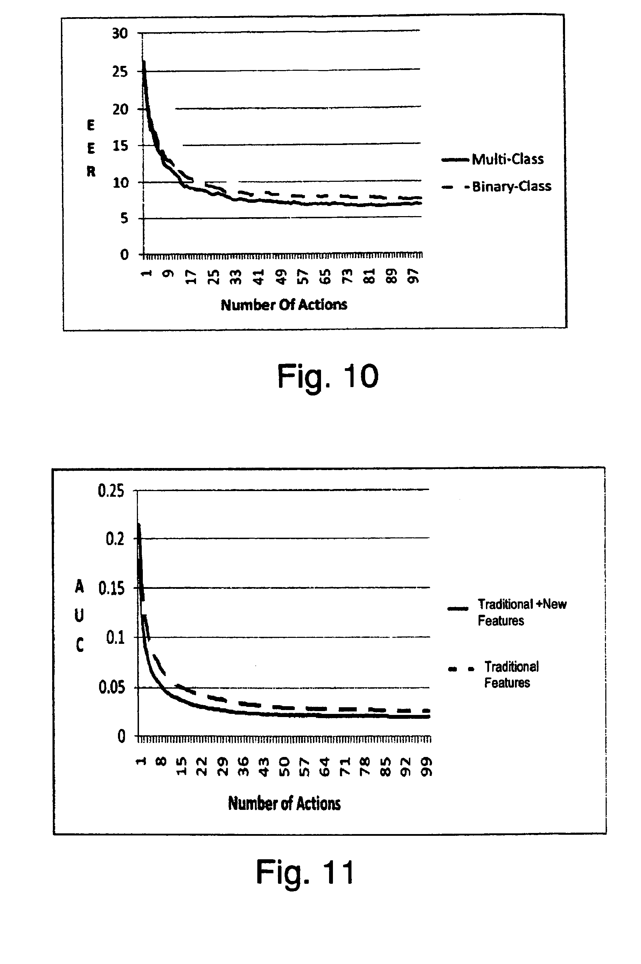

Fig. 9 depicts the comparison between the binary-class models and the multi-class model approaches in terms of the AUC using the ANOVA test with 95% significance intervals. Results show that the binary-class approach outperforms the multi-class in terms of AUC with statistical significance. Fig. 10 depicts the comparison between the binary-class models and the multi-class model approaches in terms of the EER for a number of actions ranging from 1 to 100. Results show that the binary-class approach outperforms the multi-class approach in terms of EER by 1.01% on the average for almost every number of actions between 1 and 100.

A major drawback of the binary class modeling approach is its time and space complexities which are approximately $|U|$ times greater than those of the multi-class model approach where $|U|$ denotes the number of users which take part in the training. Specifically, $|U|$ binary models are constructed for every action instead of a single multi-class model. For example, training each multi class model required 8.1896 minutes on the average, wherein testing required 2.7746 milliseconds. However, since training in the binary-model approach requires the construction of an individual binary model for every user, the training time took 7.031minutes * 12(users) = 84.372minutes and the testing time took 2.7135milliseconds * 12(users) = 32.562miliseconds.

Thus, although the binary-class approach exhibits statistically significant performance superiority over the multi-class approach, considering the time and space complexities that are required for training and testing may render it as unsuitable in time-critical settings. Consequently, choosing one of the approaches depends on the verification time and accuracy which is required. The multi-class approach is suitable when relatively fast verification (at the expense of lower accuracy) is required while the binary class provides a better choice in cases when higher accuracy is required at the expense of slower verification.

## Example 1

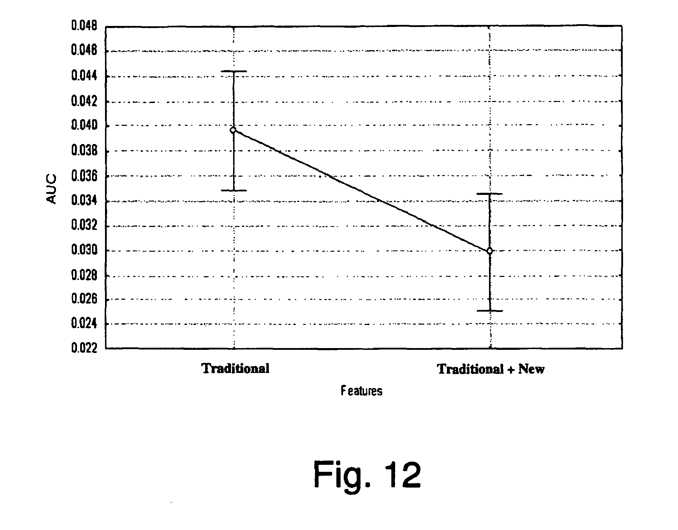

The proposed approach introduces new features to characterize mouse activity. These features are used in conjunction with features that were adopted from traditional methods. Figs. 11 and 12 present the results of two experiments conducted for determining the contribution of the newly introduced features in terms of the AUC. The first experiment verified users based only on the features that were adopted from traditional methods. The second experiment used the new features together with the ones that were adopted from traditional methods. It is clearly evident from those figures that the new features contribute to the accuracy of the model. Fig. 11 shows that using the additional new features achieves better results for any number of actions ranging from 1 to 100 which are used for the verification. Fig. 12 depicts the contribution of the new features to the accuracy of the model in terms of the ANOVA test using 95% confidence intervals.

The above examples and description have been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A system for verifying a user identity based on his interaction with a pointing device of a computer, comprising:

   i) In a training sub-system:

   a) A first acquisition module for acquiring events produced during interaction of one or more users training said pointing device, transforming said events into predefined mouse actions, and extracting features from each of said actions;
   b) a database connected to said first acquisition module, for storing for each user his respective actions and the actions associated features;
   c) a first classification module connected to said database for constructing one or more profiles for each user, each profile comprises a model for each of said predefined actions;

   ii) In a verification sub-system which operates in real time:

   d) a second acquisition module for acquiring events produced during interaction of each of said users with said pointing device, transforming said events into predefined mouse actions, and extracting features from each of said actions;
   e) a collector module connected to said second acquisition module, wherein said actions and their associated features are collected and sent to a second classification module once a predefined number of actions are collected;
   f) a second classification module connected to said collector for, given said predefined number of actions, predicting separately for each action, using the action features and the respective model within each profile, and thereby determining the probability that each of said previously trained users has performed each specific action from said predefined number of actions;
   g) a decision device connected to said classification module for aggregating the probabilities given by said second classification module to provide a final decision regarding the collected actions according to the various models within each user profile.

2. A system according to claim 1, wherein the first, second, or both acquisition modules further build a hierarchy of the extracted features in which the lowest level consists of fundamental mouse events while features at higher levels are composed of lower level ones.

3. A system according to claim 1, wherein the first, second, or both acquisition modules module further describe each event as a quartet comprising: event type, x coordinate, y coordinate, and timestamp.

4. A system according to claim 1, wherein the first, second, or both classification modules comprise one or more classifiers.

5. A system according to claim 4, wherein the classifiers are 'Random Forest' classifiers which are adapted to construct a model for each action type.

6. A system according to claim 4, wherein the classifiers are constructed using vectors composed of high level features.

7. A system according to claim 4, wherein the classifiers are trained using features taken from the group consisting of: trajectory center of mass, scattering coefficient, third and fourth moment, trajectory curvature, and velocity curvature.

8. A system according to claim 4, wherein one classifier is constructed for each action type.

9. A system according to claim 4, wherein the classifiers are trained using training sets in the form of matrices which hold the features that belong to a specific action type, wherein each action instance forms a row whose columns contain the features that are associated with the action and its label is given by the id of the user who performed the action.

10. A system according to claim 1, further comprising a models database comprising one model for each action type, wherein each model is produced using the rows of one matrix.

Fig. 1

Fig. 2

301

302

303

304

Acquisition

| Feature Acquisition | Events | Action Extractor | Actions | Feature Extractor |

Actions Features

Actions DB

## Fig. 3

400

304

Classification

401

403

Action Type Feature Matrix

Actions DB

| Feature Extractor |

Action Type Model

Models DB

## Fig. 4

Fig. 5

Fig. 6

Fig. 7

# Fig. 8

# Fig. 9

Fig. 10

Fig. 11

Fig. 12

**Europäisches Patentamt**
**European Patent Office**
**Office européen des brevets**

# EUROPEAN SEARCH REPORT

Application Number

EP 12 00 0611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/008148 A1 (JACOBSON DOV [US]) 13 January 2005 (2005-01-13) * paragraph [0032] - paragraph [0079]; claims 1-6; figures 13-17 * ----- | 1-10 | INV. G06F21/20 |
| X | US 2008/098456 A1 (ALWARD HERBERT L [US] ET AL) 24 April 2008 (2008-04-24) * paragraph [0058] - paragraph [0077]; claims 1-8; figures 2,14, 15 * ----- | 1-10 | |
| X,D | PUSARA M ET AL: "User Re-authentication via Mouse Movements", PROCEEDINGS OF THE 2004 ACM WORKSHOP ON VISUALIZATION AND DATA MINING FOR COMPUTER SECURITY. VIZSEC/DMSEC'04. WASHINGTON, DC, OCT. 29, 2004; [PROCEEDINGS OF THE ACM WORKSHOP ON VISUALIZATION AND DATA MINING FOR COMPUTER SECURITY], NEW YORK, NY : ACM,, 29 October 2004 (2004-10-29), pages 1-8, XP007904621, ISBN: 978-1-58113-974-7 * the whole document * ----- | 1-10 | TECHNICAL FIELDS SEARCHED (IPC) G06F |

The present search report has been drawn up for all claims

| Place of search | Date of completion of the search | Examiner |
|---|---|---|
| Munich | 6 July 2012 | Savvides, George |

EPO FORM 1503 03.82 (P04C01)

**ANNEX TO THE EUROPEAN SEARCH REPORT
ON EUROPEAN PATENT APPLICATION NO.**

EP 12 00 0611

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2012

| Patent document cited in search report | | Publication date | Patent family member(s) | | Publication date |
|---|---|---|---|---|---|
| US 2005008148 | A1 | 13-01-2005 | CA | 2561812 A1 | 20-10-2005 |
| | | | CN | 1957355 A | 02-05-2007 |
| | | | EP | 1735942 A2 | 27-12-2006 |
| | | | JP | 2007531942 A | 08-11-2007 |
| | | | US | 2005008148 A1 | 13-01-2005 |
| | | | WO | 2005099166 A2 | 20-10-2005 |
| US 2008098456 | A1 | 24-04-2008 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. GAMBOA ; A. FRED.** Behavioral Biometric System Based on Human Computer Interaction. *Proc. of SPIE,* 2004, vol. 5404, 381-392
- **A. A. E. AHMED ; I. TRAORE.** A New Biometric Technology Based on Mouse Dynamics. *IEEE Transactions on Dependable and Secure Computing,* July 2007, vol. 4 (3), 165-179
- **M. PUSARA ; C. E. BRODLEY.** User Re-Authentication via Mouse-movements. *Proc. of ACM Workshop Visualization and Data Mining for Computer Security,* 2004

- **F. BERGADANO ; D. GUNETTI ; C. PICARDI.** User Authentication through Keystroke Dynamics. *ACM Transacions on Information and System Security,* 2002, vol. 5 (4), 367-397
- **D. GUNETTI ; C. PICARDI.** Keystroke analysis of free text. *ACM Trans. Inf. Syst. Secur.,* 2005, vol. 8 (3), 312-347
- **M. CURTIN ; C. C. TAPPERT ; M. VILLANI ; G. NGO ; J. SIMONE ; H. S. FORT ; S. CHA.** Keystroke Biometric Recognition on Long Text Input: A Feasibility Study. *Proc. Int. Workshop Sci Comp/Comp Stat,* 2006